# EUROPÄISCHE PATENTSCHRIFT

(11) **EP 0 699 840 B1**
(45) Veröffentlichungstag und Bekanntmachung des Hinweises auf die Patenterteilung: **20.05.1998**
(21) Anmeldenummer: 94113838.0
(22) Anmeldetag: 03.09.1994
(51) Int. Cl.: F16B 12/50

(54) **Horizontale, aus Haupt- und Nebenträgern zusammengesetzte Tragkonstruktion**
Horizontal support frame composed of main and auxiliary beams
Construction de support horizontale composée de poutres principales et auxiliares

(43) Veröffentlichungstag der Anmeldung: 06.03.1996
(73) Patentinhaber: NEDCON MAGAZIJNINRICHTING B.V., NL-7000 AA Doetinchem (NL)
(72) Erfinder: Hollander, Rudolf, NL-7251 KC Vorden (NL)
(74) Vertreter: Stenger, Watzke & Ring Patentanwälte

(56) Entgegenhaltungen:
- WO-A-83/03811
- US-A- 4 172 677
- US-A- 4 347 015

## Beschreibung

Die Erfindung betrifft eine Horizontale, aus Haupt- und Nebenträgern zusammengesetzte Tragkonstruktion mit Verbindungselementen zum Ableiten der von den Nebenträgern aufgenommenen Querkräfte auf den statisch übergeordneten Hauptträger, wobei die Nebenträger jeweils aus einem im Querschnitt annähernd sigmaförmig gestalteten Profil bestehen, das zwei beidseitig und parallel zu einem Mittelabschnitt in einer gemeinsamen Vertikalebene angeordnete Flanschabschnitte und zwei Horizontalabschnitte, die die Ober- und Unterseite des Profils bilden, umfaßt sowie gegebenenfalls zwei weitere beidseitig des Mittelabschnitts und parallel zu diesem und zu den Flanschabschnitten in einer gemeinsamen Vertikalebene angeordnete Flanschabschnitte aufweist.

Horizontale Tragkonstruktionen, die aus Haupt- und Nebenträgern zusammengesetzte Balkenkonstruktionen sind, finden z. B. bei der Herstellung mehrstöckiger Lagerflächen Verwendung. Um in den einzelnen Ebenen eine möglichst große Nutzhöhe zu erhalten, setzt sich eine gattungsgemäß aufgebaute Tragkonstruktion aus Haupt- und Nebenträgern zusammen, die sich in derselben horizontalen Ebene befinden. Die unmittelbare Aufnahme der Traglast erfolgt über die Nebenträger, auf denen die einzelnen Geschoßdecken in Form von Sperrholzböden oder Trapezflächen ausgelegt sind. Die Nebenträger sind mit ihren jeweiligen Enden an den statisch übergeordneten Hauptträgern angeknüpft, wobei zum Erreichen einer ebenen Tragkonstruktion die Enden der Nebenträger mittels geeigneter Verbindungselemente seitlich an dem jeweiligen Hauptträger befestigt sind.

Als nächstliegender Stand der Technik ist aus US-PS 4 172 677 eine Tragkonstruktion bekannt, bei der sowohl für die Hauptträger als auch für die Nebenträger Profile mit einem in etwa sigmaförmigen Querschnitt verwendet werden. Diese Profile sind mit einem vertikalen Mittelabschnitt versehen, an den sich beidseitig in einer zum Mittelabschnitt parallelen Vertikalebene angeordnete Flanschabschnitte anschließen. Bei den bekannten Profilen ist zwischen dem Mittelabschnitt und den beiden Flanschabschnitten jeweils ein schräg verlaufender Verbindungsabschnitt vorgesehen. Ferner wird die Ober-bzw. Unterseite derartiger Profile durch jeweils einen Horizontalabschnitt gebildet, der schließlich über eine weitere Abwinklung in jeweils einen weiteren Flanschabschnitt übergeht. Insgesamt verfügt ein solcher Träger somit über vier Flanschabschnitte, die sich auf zwei zueinander parallele Ebenen verteilen, sowie einen im Zentrum angeordneten Mittelabschnitt, dessen Ebene zwischen den beiden Ebenen der Flanschabschnitte liegt.

Bei Belastung eines solchen Trägers entstehen teilweise beträchtliche Querkräfte, die zu Schubspannungen im Träger führen. Diese Schubspannungen sind zwar infolge der ausreichend bemessenen Materialfestigkeit und -dicke für den Nebenträger selbst unkritisch, sie werden jedoch bei den bekannten Tragkonstruktionen von der Verbindung zwischen Haupt- und Nebenträger nicht hinreichend aufgefangen, so daß es dort zu starken Spannungsspitzen und Verformungen kommt. Diese Spannungsspitzen infolge der Schubspannungen innerhalb des Nebenträgers können zu einem teilweisen Absenken des Nebenträgers gegenüber dem Hauptträger führen. Dieses Absenken wird nur dort von dem Verbindungselement bzw. vom Hauptträger abgefangen, wo eine starre Verbindung zwischen Nebenträgerabschnitt und Verbindungselement vorliegt. Jene vertikalen Querschnittsbereiche des Nebenträgers hingegen, die nicht starr mit dem Verbindungselement verbunden sind, senken sich infolge der inneren Schubkräfte ab. Hierdurch kommt es zu einer Schwächung der Tragkraft der Verbindung.

Der Erfindung liegt daher die **Aufgabe** zugrunde, eine horizontale, aus Haupt- und Nebenträgern zusammengesetzte Tragkonstruktion zu schaffen, bei der die durch die Querkräfte erzeugten Schubspannungen innerhalb des Nebenträgers besser auf den statisch übergeordneten Hauptträger abgeleitet werden.

Zur **Lösung** dieser Aufgabe wird bei einer Tragkonstruktion der eingangs genannten Art vorgeschlagen, daß die Verbindungselemente jeweils zugleich an dem Mittelabschnitt sowie an den zwei Flanschabschnitten oder jeweils zugleich an dem Mittelabschnitt und an den zwei weiteren Flanschabschnitten der Nebenträger starr befestigt sind.

Während bei der bekannten Tragkonstruktion das Verbindungselement ausschließlich am Mittelabschnitt oder an den Flanschabschnitten des Nebenträgers starr befestigt ist, wodurch die im Nebenträger wirkenden Querkräfte auch nur dort wirksam abgefangen werden, ist erfindungsgemäß das Verbindungselement schubspannungsgerecht ausgebildet, indem dieses gleichzeitig an dem Mittelabschnitt sowie den Flanschabschnitten des Nebenträgers starr verbunden ist. Auf diese Weise werden die schubspannungsbedingten Querkräfte des Nebenträgers in zwei zueinander parallelen Vertikalebenen abgefangen und auf das Verbindungselement und damit auf den Hauptträger übertragen. Dadurch kann es zu keinem teilweisen Verformen und Absenken des Nebenträger-Profils im Verbindungsbereich mehr kommen.

Bei einer Weiterbildung der Tragkonstruktion wird vorgeschlagen, daß das Verbindungselement zwei Anschlußflächen in zwei zueinander parallelen Ebenen aufweist, wobei die erste Anschlußfläche an den Flanschabschnitten und die zweite Anschlußfläche an dem Mittelabschnitt des Nebenträgers anliegt.

Zur Erzielung einer möglichst großen Steifheit des Verbindungselements wird ferner vorgeschlagen, daß die Anknüpfung des Verbindungselements an den Hauptträger mittels einer weiteren Anschlußfläche des Verbindungselements bewerkstelligt wird, die sich zwischen den beiden Vertikalebenen der ersten und zweiten Anschlußflächen erstreckt und rechtwinklig zu diesen ausgerichtet ist. Die Steifheit des Verbindungselements läßt sich ferner dadurch erhöhen, daß das Verbindungselement einstückig und, in einem horizontalen Schnitt betrachtet, U-förmig gestaltet ist, wobei die beiden Schenkel die ersten und zweiten Anschlußflächen an den Nebenträger bilden, während der die Schenkel verbindende Steg die an dem Hauptträger befestigte weitere Anschlußfläche bildet. Ein in dieser Weise ausgebildetes Verbindungselement verhält sich weitgehend starr, und bietet daher die besten Voraussetzungen, um die Querkräfte des Nebenträgers wirkungsvoll auf den statisch übergeordneten Hauptträger zu übertragen.

Um das Verbindungselement sowohl für Tragkonstruktionen verwenden zu können, bei denen Haupt- und Nebenträger gleich ausgebildet sind, als auch für Tragkonstruktionen mit unterschiedlich geformten Haupt- und Nebenträgern, wird ferner vorgeschlagen, daß die Gesamthöhe der an den Flanschabschnitten des Nebenträgers anliegenden ein- oder zweiteiligen ersten Anschlußfläche gleich der Höhe des Nebenträgers ist, während die Höhen der am Mittelabschnitt des Nebenträgers anliegenden zweiten Anschlußfläche sowie der an dem Hauptträger anliegenden weiteren Anschlußfläche jeweils gleich der Höhe des Mittelabschnitts des Nebenträgers sind.

Die Festigkeit der Verbindung zwischen Hauptträger und Verbindungselement läßt sich erhöhen, indem gemäß einer Weiterbildung der Tragkonstruktion ein Übergang zwischen erster Anschlußfläche und weiterer Anschlußfläche vorgesehen wird, wobei sich die Höhe des Übergangs, ausgehend von der ersten Anschlußfläche und in deren Verlängerung, trapezförmig bis auf die Höhe der weiteren Anschlußfläche verringert. Hierbei ist es von zusätzlichem Vorteil, wenn der trapezförmige Übergang eine Fläche beschreibt, die gleich ist zu einer Fläche, die durch schräg verlaufende Verbindungsabschnitte des Profils des Nebenträgers aufgespannt ist, welche die Flanschabschnitte jeweils mit dem Mittelabschnitt verbinden. Der trapezförmige Übergang versteift nicht nur das Verbindungselement selbst, sondern er führt auch zu einer bündigen Abstützung des Verbindungselements an der entsprechend geformten Kontur in der Seitenfläche des Hauptträgers, so daß sich eine weitgehend starr verhaltende Verbindung zwischen Hauptträger und Verbindungselement ergibt.

Schließlich wird vorgeschlagen, daß Haupt- und Nebenträger geometrisch gleich aufgebaut und jeweils über Verschraubungen mit dem Verbindungselement verbunden sind, wobei jene Schraublöcher des Verbindungselements, welche der Befestigung an dem Hauptträger dienen, tiefer angeordnet sind als die entsprechenden, der Befestigung an dem Nebenträger dienenden Schraublöcher. Hierdurch wird der Setzungsmöglichkeit des Nebenträgers im Verhältnis zum Hauptträger im Bereich der Verbindung entgegengewirkt. Zugleich läßt sich das Spiel in den beteiligten Schraubverbindungen ausgleichen.

Eine Tragkonstruktion mit den erfindungsgemäßen Merkmalen wird nachfolgend anhand der Zeichnung erläutert. Darin zeigen:
- Fig. 1: in einer Explosionsdarstellung die Anknüpfung eines Nebenträgers an einem Hauptträger mittels eines Verbindungselementes;
- Fig. 2: einen Träger, der in Fig. 1 dargestellten Art in einer Querschnittsdarstellung einschließlich einer graphischen Veranschaulichung der Schubspannungsverteilung innerhalb des Trägers;
- Fig. 3a-3c: einen Träger gemäß Fig. 2 in unter dem Einfluß von Schubkräften hervorgerufenen Verformungszuständen, wie sie mit der Erfindung vermieden werden sollen, und
- Fig. 4: in einer perspektivischen Ansicht Einzelheiten des Verbindungselementes aus Fig. 1.

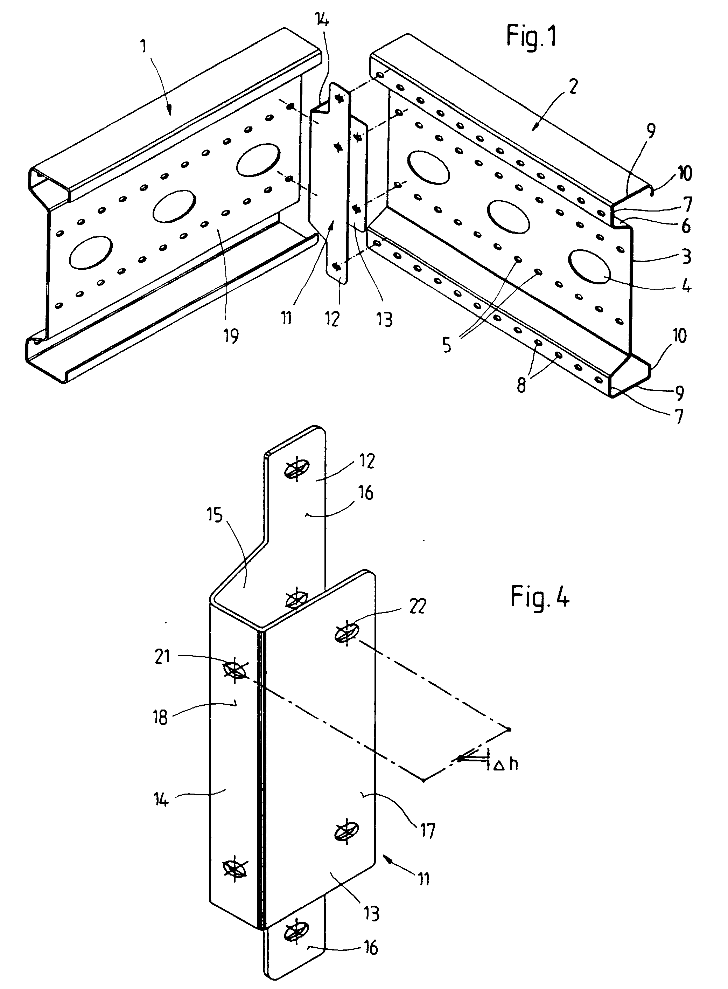

In Fig. 1 ist die Einzelheit einer horizontalen Tragkonstruktion dargestellt, die sich aus Hauptträgern 1 und rechtwinklig hierzu angeordneten Nebenträgern 2 zusammensetzt. Hauptträger 1 und Nebenträger 2 befinden sich innerhalb derselben horizontalen Ebene und bestehen darüber hinaus beim Ausführungsbeispiel gemäß Fig. 1 aus identisch aufgebauten Profilen.

Diese Profile weisen einen in etwa sigmaförmigen Querschnitt mit Symmetrie bezüglich der horizontalen Schnittebene auf. Zentraler Teil des Profils ist ein Mittelabschnitt 3, der sich in etwa über zwei Drittel der Höhe des Profils erstreckt. Der Mittelabschnitt 3 ist gleichmäßig über seine Länge mit zentralen größeren Öffnungen 4 versehen, die in erster Linie der Gewichtsersparnis dienen. Entlang der oberen und unteren Ränder des Mittelabschnitts 3 erstreckt sich eine größere Anzahl kleinerer Öffnungen 5, die ausschließlich Befestigungszwecken dienen. Nach oben und unten schließen sich beidseitig an den Mittelabschnitt 3 schräg verlaufende Verbindungsabschnitte 6 an, die jeweils in Flanschabschnitte 7 übergehen. Beide Flanschabschnitte 7 befinden sich in einer gemeinsamen, zum Mittelabschnitt 3 parallelen und diesem gegenüber vorspringenden Vertikalebene. Auch die Flanschabschnitte 7 sind mit kleineren Öffnungen 8 versehen, wobei die kleineren Öffnungen 8, bei seitlicher Ansicht des Profils, über den kleineren Öffnungen 5 des Mittelabschnitts 3 liegen. Auch die kleineren Öffnungen 8 dienen nachfolgend näher beschriebenen Befestigungszwecken.

Die Flanschabschnitte 7 gehen in Gestalt rechtwinkliger Abbiegungen in Horizontalabschnitte 9 über, welche die Ober- bzw. Unterseite des Profils bilden. An die Horizontalabschnitte 9 wiederum schließen sich nach innen rechtwinklig abgebogene, weitere Flanschabschnitte 10 an, die sich in der Weise parallel zu den Flanschabschnitten 7 erstrecken, daß sämtliche Flanschabschnitte 7, 10 ein Rechteck aufspannen, in dessen Zentrum der Mittelabschnitt 3 angeordnet ist. Ebenso wie die Flanschabschnitte 7, können auch die Flanschabschnitte 10 kleinere Öffnungen 8 in regelmäßigen Abständen aufweisen.

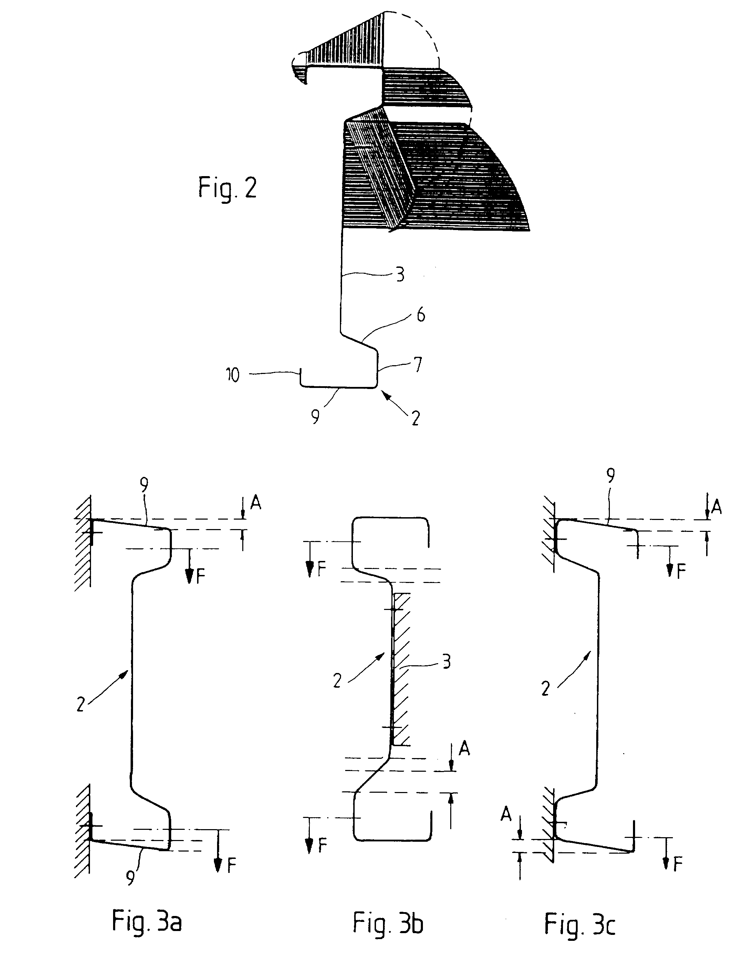

Bei Belastung des Profils durch eine von oben wirkende Querkraft stellt sich, verteilt auf die einzelnen Abschnitte des Profils, der in Fig. 2 dargestellte Verlauf der inneren Schubspannung ein. Zu erkennen ist, daß sich beträchtliche Schubspannungen nicht nur an den vertikal verlaufenden Abschnitten 3, 7 und 10 ergeben, sondern auch an jenen Abschnitten 6, 9, die überwiegend horizontal ausgerichtet sind.

Infolge dieser Schubspannungsanteile kommt es bei nur ungenügend befestigten Trägerenden zu Verformungen des Profils, wie sie in etwas übertriebener Darstellung in den Fig. 3a, 3b und 3c gezeigt sind. Eingezeichnet in den Fig. 3a, 3b und 3c sind jeweils die am Nebenträger 2 wirkenden Kräfte infolge der Resultierenden der Schubspannungen der jeweiligen Abschnitte sowie die hierdurch hervorgerufene Verformung bzw. Absenkung A. Das Profil senkt sich hier partiell ab, wobei jedoch abhängig von der Schubspannungsverteilung ebenso ein teilweises Anheben dieser Abschnitte eintreten kann. In jedem Fall ist nicht mehr gewährleistet, daß sich die Horizontalabschnitte 9 in der gewünschten Horizontalebene befinden, wodurch einerseits deren Lastaufnahmeverhalten beeinträchtigt ist, sich andererseits aber auch ein ungünstiger Kraftfluß im Bereich der Verbindung zwischen Nebenträger 2 und Hauptträger 1 ergibt.

Um das Problem der ungenügend verbundenen Trägerenden zu beseitigen, und den Kraftfluß zwischen Nebenträger 2 und Hauptträger 1 zu verbessern, erfolgt die Befestigung des Nebenträgers 2 am Hauptträger 1 über ein in Fig. 1 in Montagestellung und in Fig. 4 im Detail dargestelltes Verbindungselement 11. Dieses besteht, in einem horizontalen Schnitt betrachtet, aus einem U-förmig abgewinkelten Blech mit einem ersten vertikalen Schenkel 12, einem zweiten vertikalen Schenkel 13 sowie einem die beiden Schenkel 12, 13 verbindenden, ebenen Steg 14. Die Höhe des ersten Schenkels 12 entspricht der Gesamthöhe des Profils des Nebenträgers 2, während die Höhe des zweiten Schenkels 13 gleich oder geringer ist als die Höhe des Mittelabschnitts 3 des Nebenträgers 2. Der Steg 14 bildet eine direkte Verlängerung des zweiten Schenkels 13 und weist dessen Höhe auf. Während zweiter Schenkel 13 und Steg 14 in Gestalt einfacher Rechtecke geformt sind, weist der erste Schenkel 12 zwei geometrisch unterschiedlich gestaltete Bereiche auf. An einen schmalen, rechteckigen Bereich, der die Höhe des ersten Schenkels 12 bestimmt, schließt sich ein trapezförmig gestalteter Übergang 15 an, der eine Fläche beschreibt, die gleich ist zu jener gedachten Fläche, die durch die schräg verlaufenden Verbindungsabschnitte 6 des Profils aufgespannt ist. Der trapezförmige Übergang 15 erreicht daher seine geringste Höhe im Bereich des abgewinkelten Übergangs zum Steg 14.

Fig. 1, in der das Verbindungselement 11 in Montagestellung dargestellt ist, läßt die Funktion von erstem 12 und zweitem Schenkel 13 sowie die Funktion des Steges 14 erkennen: der lange, rechteckige Bereich des ersten Schenkels 12 bildet eine einteilige erste Anschlußfläche 16, die an den beiden Flanschabschnitten 7 anliegt. Der kürzer ausgebildete zweite Schenkel 13 bildet eine zweite Anschlußfläche 17, die an jener Seite des Mittelabschnitts 3 des Nebenträgers 2 anliegt, die zu derselben Seite des Nebenträgers 2 hinweist, wie die Flanschabschnitte 7. Der Steg 14 schließlich bildet mit seiner Außenseite eine weitere Anschlußfläche 18, die an dem Hauptträger 1 befestigt ist. Da beim Ausführungsbeispiel gemäß Fig. 1 Hauptträger 1 und Nebenträger 2 identisch ausgebildet sind, ist in diesem Fall die weitere Anschlußfläche 18 an dem Mittelabschnitt 19 des Hauptträgers 1 befestigt.

Die Befestigung der einzelnen Teile aneinander erfolgt über Verschraubungen. Fig. 4 läßt erkennen, daß zu diesem Zweck das Verbindungselement 11 mit Schraublöchern versehen ist, deren Lage auf die Lage der kleineren Öffnungen 5, 8 des Profils abgestimmt ist. In fertig montiertem Zustand ist das Verbindungselement 11 über jeweils eine Schraube mit den Flanschabschnitten 7, und über zwei Schrauben mit dem Mittelabschnitt 3 des Nebenträgers 2 verbunden. Ferner erfolgt über zwei Schrauben in dem Steg 14 eine Verbindung mit dem Mittelabschnitt 19 des Hauptträgers 1.

Im Falle des in Fig. 1 dargestellten Verbindens eines Nebenträgers 2 mit einem identisch gestalteten Hauptträger 1 können die Schraublöcher in dem Verbindungselement 11 so angeordnet sein, daß die Schraublöcher 21 in dem Steg 14 mit der weiteren Anschlußfläche 18 geringfügig tiefer sitzen, als die Schraublöcher 22 in dem zweiten Schenkel 13 mit der zweiten Anschlußfläche 17. Diese Höhendifferenz ist in Fig. 4 mit Δh eingezeichnet. Hierdurch wird das Spiel der Schraubverbindung ausgeglichen, so daß letztlich Hauptträger 1 und Nebenträger 2 in exakt derselben Horizontalebene liegen.

Das in Fig. 1 dargestellte Ausführungsbeispiel zeigt die Anknüpfung des Nebenträgers 2 an einem identisch gestalteten Hauptträger 1. Dies muß jedoch nicht so sein, vielmehr läßt sich der Nebenträger 2 mittels der weiteren Anschlußfläche 18 des Verbindungselements 11 auch an anders gestalteten, statisch übergeordneten Trägerstrukturen befestigen, z. B. an einer vertikalen Stütze oder an der Seitenfläche eines Doppel-T-Trägers.

### Bezugszeichenliste

- 1: Hauptträger
- 2: Nebenträger
- 3: Mittelabschnitt
- 4: größere Öffnung
- 5: kleinere Öffnung
- 6: Verbindungsabschnitt
- 7: Flanschabschnitt
- 8: kleinere Öffnung
- 9: Horizontalabschnitt
- 10: Flanschabschnitt
- 11: Verbindungselement
- 12: erster Schenkel
- 13: zweiter Schenkel
- 14: Steg
- 15: trapezförmiger Übergang
- 16: erste Anschlußfläche
- 17: zweite Anschlußfläche
- 18: weitere Anschlußfläche
- 19: Mittelabschnitt des Hauptträgers
- 21: Schraubloch
- 22: Schraubloch
- Δh: Höhendifferenz

## Patentansprüche

1. Horizontale, aus Haupt- und Nebenträgern zusammengesetzte Tragkonstruktion mit Verbindungselementen zum Ableiten der von den Nebenträgern aufgenommenen Querkräften auf den statisch übergeordneten Hauptträger, wobei die Nebenträger (2) jeweils aus einem im Querschnitt annähernd sigmaförmig gestalteten Profil bestehen, das zwei beidseitig und parallel zu einem Mittelabschnitt (3) in einer gemeinsamen Vertikalebene angeordnete Flanschabschnitte (7) und zwei Horizontalabschnitte (9), die die Ober- und Unterseite des Profils bilden, umfaßt sowie gegebenenfalls zwei weitere beidseitig des Mittelabschnitts (3) und parallel zu diesem und zu den Flanschabschnitten (7) in einer gemeinsamen Vertikalebene angeordnete Flanschabschnitte (10) aufweist,
**dadurch gekennzeichnet,**
daß die Verbindungselemente (11) jeweils zugleich an dem Mittelabschnitt (3) und an den zwei Flanschabschnitten (7) oder jeweils zugleich an dem Mittelabschnitt (3) und an den zwei weiteren Flanschabschnitten (10) der Nebenträger (2) starr befestigt sind.

2. Tragkonstruktion nach Anspruch 1, dadurch gekennzeichnet, daß das Verbindungselement (11) zwei Anschlußflächen (16, 17) in zwei zueinander parallelen Ebenen aufweist, wobei die erste Anschlußfläche (16) an den Flanschabschnitten (7) bzw. den weiteren Flanschabschnitten (10) und die zweite Anschlußfläche (17) an dem Mittelabschnitt (3) des Nebenträgers (2) anliegt.

3. Tragkonstruktion nach Anspruch 2, dadurch gekennzeichnet, daß die Anknüpfung des Verbindungselementes (11) an den Hauptträger (1) mittels einer weiteren Anschlußfläche (18) des Verbindungselementes (11) bewerkstelligt wird, die sich zwischen den beiden Vertikalebenen der ersten (16) und zweiten (17) Anschlußfläche erstreckt und rechtwinklig zu diesen ausgerichtet ist.

4. Tragkonstruktion nach Anspruch 3, dadurch gekennzeichnet, daß das Verbindungselement (11) einstückig und, in einem horizontalen Schnitt betrachtet, U-förmig gestaltet ist, wobei die beiden Schenkel (12, 13) die ersten (16) und zweiten (17) Anschlußflächen an den Nebenträger (2) bilden, während der die Schenkel (12, 13) verbindende Steg (14) die an dem Hauptträger (1) befestigte weitere Anschlußfläche (18) bildet.

5. Tragkonstruktion nach Anspruch 3 oder Anspruch 4, dadurch gekennzeichnet, daß die Gesamthöhe der an den Flanschabschnitten (7) bzw. an den weiteren Flanschabschnitten (10) des Nebenträgers (2) anliegenden ein- oder zweiteiligen ersten Anschlußfläche (16) gleich der Höhe des Nebenträgers (2) ist, während die Höhen der am Mittelabschnitt (3) des Nebenträgers (2) anliegenden zweiten Anschlußfläche (17) sowie der an dem Hauptträger (1) anliegenden weiteren Anschlußfläche (18) jeweils gleich der Höhe des Mittelabschnittes (3) des Nebenträgers (2) sind.

6. Tragkonstruktion nach Anspruch 4 oder Anspruch 5, gekennzeichnet durch einen Übergang (15) zwischen erster Anschlußfläche (16) und weitere Anschlußfläche (18), wobei sich die Höhe des Übergangs (15), ausgehend von der ersten Anschlußfläche (16) und in deren Verlängerung, trapezförmig bis auf die Höhe der weiteren Anschlußfläche (18) verringert.

7. Tragkonstruktion nach Anspruch 6, dadurch gekennzeichnet, daß der trapezförmige Übergang (15) eine Fläche beschreibt, die gleich ist zu einer Fläche, die durch schräg verlaufende Verbindungsabschnitte (6) des Profils des Nebenträgers (2) aufgespannt ist, welche die Flanschabschnitte (7) jeweils mit dem Mittelabschnitt (3) verbinden.

8. Tragkonstruktion nach einem der vorangehenden Ansprüche, dadurch gekennzeichnet, daß Haupt- und Nebenträger (1, 2) geometrisch gleich aufgebaut und jeweils über Verschraubungen mit dem Verbindungselement (11) verbunden sind, wobei jene Schraublöcher (21) des Verbindungselementes (11), welche der Befestigung an dem Hauptträger (1) dienen, tiefer angeordnet sind als die entsprechenden, der Befestigung an dem Nebenträger (2) dienenden Schraublöcher (22).

## Claims

1. Horizontal load-bearing structure which is made up of main load-bearing members and secondary load-bearing members and has connecting elements for leading away to the statically more important, main load-bearing member the transverse forces absorbed by the secondary load-bearing members, the secondary load-bearing members (2) each comprising a profile which is of approximately sigma-shaped configuration in cross-section, comprises two flange sections (7), which are arranged in a common vertical plane on both sides and parallel to a central section (3), and two horizontal sections (9), which form the top side and underside of the profile, and, if appropriate, have two further flange sections (10), which are arranged in a common vertical plane on both sides of the central section (3) and parallel to the latter and to the flange sections (7), characterized in that the connecting elements (11) are each rigidly fastened at the same time on the central section (3) and on the two flange sections (7) of the secondary load-bearing members (2) or are each rigidly fastened at the same time on the central section (3) and on the two further flange sections (10) of the secondary load-bearing members (2).

2. Load-bearing structure according to Claim 1, characterized in that the connecting element (11) has two connection surfaces (16, 17) in two mutually parallel planes, the first connection surface (16) butting against the flange sections (7) or further flange sections (10) of the secondary load-bearing member (2), and the second connection surface (17) butting against the central section (3) of the secondary load-bearing member (2).

3. Load-bearing structure according to Claim 2, characterized in that the connecting element (11) is attached to the main load-bearing member (1) by means of a further connection surface (18) of the connecting element (11), said further connection surface extending between the two vertical planes of the first connection surface (16) and second connection surface (17) and being aligned at right angles to these.

4. Load-bearing structure according to Claim 3, characterized in that the connecting element (11) is in one piece and, as seen in horizontal section, is of U-shaped configuration, the two legs (12, 13) forming the first connection surface (16) and second connection surface (17) to the secondary load-bearing member (2), while the web (14) connecting the legs (12, 13) forms the further connection surface (18), which is fastened on the main load-bearing member (1).

5. Load-bearing structure according to Claim 3 or Claim 4, characterized in that the overall height of the single-part or two-part, first connection surface (16), which butts against the flange sections (7) or further flange sections (10) of the secondary load-bearing member (2), is equal to the height of the secondary load-bearing member (2), while the heights of the second connection surface (17), which butts against the central section (3) of the load-bearing member (2), and of the further connection surface (18), which butts against the main load-bearing member (1), are each equal to the height of the central section (3) of the secondary load-bearing member (2).

6. Load-bearing structure according to Claim 4 or Claim 5, characterized by a transition (15) between the first connection surface (16) and further connection surface (18), the height of the transition (15), extending from the first connection surface (16), decreasing trapezoidally to the height of the further connection surface (18).

7. Load-bearing structure according to Claim 6, characterized in that the trapezoidal transition (15) describes a surface which is equal to a surface which is defined by obliquely running connecting sections (6) of the profile of the secondary load-bearing member (2), these connecting sections connecting the flange sections (7) to the central section (3) in each case.

8. Load-bearing structure according to one of the preceding claims, characterized in that the main load-bearing member (1) and secondary load-bearing member (2) are of the same geometrical construction and are each connected to the connecting element (11) via screws, those screw holes (21) of the connecting element (11) which serve for fastening on the main load-bearing member (1) being arranged at a lower level than the corresponding screw holes (22) which serve for fastening on the secondary load-bearing member (2).

## Revendications

1. Construction de support horizontale constituée de poutres principales et auxiliaires, comportant des éléments de liaison destinés à transmettre les forces transversales absorbées par les poutres auxiliaires sur les poutres principales hiérarchiquement supérieures du point de vue statique, chacune des poutres auxiliaires (2) étant constituée d'un profilé ayant approximativement une section transversale en forme de sigma, lequel comprend deux tronçons de brides (7) disposés dans un plan vertical commun des deux côtés et parallèlement à un tronçon médian (3), et deux tronçons horizontaux (9) qui forment les faces supérieure et inférieure du profilé, ainsi que le cas échéant deux autres tronçons de brides (10) disposés dans un plan vertical commun des deux côtés du tronçon médian (3) et parallèlement à ce dernier et aux tronçons de brides (7),
caractérisée en ce que
les éléments de liaison (11) sont respectivement fixés de façon rigide simultanément sur le tronçon médian (3) et sur les deux tronçons de brides (7), ou simultanément sur le tronçon médian (3) et sur les deux autres tronçons de brides (10) de la poutre auxiliaire (2).

2. Construction de support selon la revendication 1, caractérisée en ce que l'élément de liaison (11) comporte deux surfaces de raccordement (16, 17) dans deux plans parallèles l'un par rapport à l'autre, la première surface de raccordement (16) s'appliquant sur les tronçons de brides (7) ou sur les autres tronçons de brides (10), et la deuxième surface de raccordement (17) s'appliquant sur le tronçon médian (3) de la poutre auxiliaire (2).

3. Construction de support selon la revendication 2, caractérisée en ce que l'élément de liaison (11) est relié à la poutre principale (1) au moyen d'une autre surface de raccordement (18) de l'élément de liaison (11), laquelle s'étend entre les deux plans verticaux de la première surface de raccordement (16) et de la deuxième (17), et est orientée à angle droit par rapport à ces dernières.

4. Construction de support selon la revendication 3, caractérisée en ce que l'élément de liaison (11) est réalisé d'un seul tenant et a une forme de U, vue en coupe horizontale, les deux branches (12, 13) formant la première surface de raccordement (16) et la deuxième (17) sur les poutres auxiliaires (2), alors que la barrette (14) reliant les branches (12, 13) forme l'autre surface de raccordement (18) fixée sur la poutre principale (1).

5. Construction de support selon la revendication 3 ou la revendication 4, caractérisée en ce que la hauteur totale de la première surface de raccordement (16) en une ou deux parties s'appliquant sur les tronçons de brides (7) ou sur les autres tronçons de brides (10) de la poutre auxiliaire (2) est égale à la hauteur de la poutre auxiliaire (2), alors que les hauteurs de la deuxième surface de raccordement (17) s'appliquant sur le tronçon médian (3) de la poutre auxiliaire (2), ainsi que de l'autre surface de raccordement (18) s'appliquant sur la poutre principale (1), sont respectivement égales à la hauteur du tronçon médian (3) de la poutre auxiliaire (2).

6. Construction de support selon la revendication 4 ou la revendication 5, caractérisée par une transition (15) entre la première surface de raccordement (16) et l'autre surface de raccordement (18), la hauteur de la transition (15) se réduisant en forme de trapèze à la hauteur de l'autre surface de raccordement (18) à partir de la première surface de raccordement (16), et dans le prolongement de cette dernière.

7. Construction de support selon la revendication 6, caractérisée en ce que la transition trapézoïdale (15) décrit une surface qui est égale à une surface formée par des tronçons de liaison (6) s'étendant obliquement du profilé de la poutre auxiliaire (2), lesquels relient les tronçons de brides (7) au tronçon médian (3).

8. Construction de support selon l'une quelconque des revendications précédentes, caractérisée en ce que les poutres principales et auxiliaires (1, 2) sont géométriquement agencées de façon identique, et sont respectivement reliées à l'élément de liaison (11) par l'intermédiaire de vissages, les trous de vis (21) de l'élément de liaison (11) servant à la fixation sur la poutre principale (1) étant disposés à un niveau plus bas que les trous de vis (22) correspondants servant à la fixation sur la poutre auxiliaire (2).
